# FASCICULE DE BREVET EUROPEEN

(11) **EP 1 280 322 B1**
(45) Date de publication et mention de la délivrance du brevet: **12.01.2005**
(21) Numéro de dépôt: 02291867.6
(22) Date de dépôt: 24.07.2002
(51) Int. Cl.: H04M 1/725

(54) **Procédé d'établissement de communications inter-combinés dans un réseau local de radiocommunication**
Verfahren zur Aufbau einer Interkommunikationsverbindung in einem lokalen Funkkommunikationsnetz
Method of setting up an intercom communication in a local radiocommunication network

(30) Priorité: 25.07.2001 FR 0109919
(43) Date de publication de la demande: 29.01.2003
(73) Titulaire: SAGEM S.A., 75015 Paris (FR)
(72) Inventeur: Pastor, David, 77000 Melun (FR)
(74) Mandataire: Bloch, Gérard

(56) Documents cités:
- EP-A- 0 933 915
- EP-A- 1 051 875
- US-A- 5 619 553

## Description

La présente invention concerne les communications entres les combinés téléphoniques d'un réseau local de transmission radio de signaux numériques.

Lorsqu'un tel réseau est établi selon la norme DECT par exemple, il comporte une base radio à travers laquelle les combinés téléphoniques, désignés aussi terminaux, peuvent communiquer entre eux. La base constitue un noeud central du réseau, qui retransmet à chaque combiné téléphonique les signaux numériques, de voix ou de données, reçus de son correspondant avec lequel il communique.

Pour traiter une pluralité de communications simultanées, la base asservit les combinés téléphoniques en les synchronisant sur une trame temporelle d'une pluralité de canaux dont les premiers sont réservés aux transmissions de la base vers les combinés téléphoniques et les derniers sont réservés aux transmissions de sens opposé. Une telle trame est du type TDMA/TDD à Accès Multiple par Division Temporelle/ division Temporelle duplex. Pour établir cet asservissement temporel, la base émet cycliquement une balise, un mot de code, dans un canal d'émission prédéterminé, en indiquant son rang dans la trame. Tout combiné téléphonique qui entre dans la zone de couverture radio de la base reconnaît la balise et, d'après l'instant correspondant et le rang du canal, il en détermine le début de la nouvelle trame et cale ainsi temporellement ses émissions et réceptions sur la trame de la base.

Au sein d'un tel réseau, on sait aussi établir une liaison en mode direct de combiné téléphonique à combiné téléphonique. Ce mode de communication permet à deux utilisateurs de communiquer sans avoir besoin d'être à portée de la base DECT.

Pour établir ce mode de communication, la procédure connue consiste à saisir tout d'abord une clé à 5 chiffres comportant un numéro de groupe à trois chiffres pour identifier la base et deux chiffres pour identifier le ou les combinés téléphoniques avec lesquels on souhaite communiquer dans ce mode et qui comportent en mémoire le même numéro de groupe. Une fois ces informations pré-saisies, on peut mettre deux combinés téléphoniques en communication en mode direct en sélectionnant ce mode sur les combinés téléphoniques et en saisissant le numéro du combiné téléphonique avec lequel on souhaite se mettre en communication directe.

La Demanderesse constate que dans la majorité des utilisations, le nombre de combinés téléphoniques en service sur une base est très faible au regard du nombre qu'il est possible de réserver, c'est à dire une centaine. En effet si on vise
un marché d'utilisateurs essentiellement familiaux ou à structure de réseau simple, le nombre de combinés téléphoniques en service ne dépasse pas deux ou trois.

La Demanderesse s'est fixé comme objectif général de réduire autant que possible les manipulations sur les combinés téléphoniques.

Par ailleurs, puisque le mode de communication direct inter-combinés téléphoniques s'apparente tout à fait au fonctionnement des talkies-walkies où il suffit d'appuyer sur le bouton de prise de ligne pour entrer en communication avec son interlocuteur, il serait souhaitable vis à vis des utilisateurs de reproduire ce mode de fonctionnement sur les combinés téléphoniques.

EP 1051875 décrit un procédé pour établir une communication entre une base radio et au moins un premier et un deuxième combinés téléphoniques ou stations mobiles. Il comprend les étapes suivantes :
- établissement d'une première connection entre le premier combiné téléphonique et la base,
- transmission des informations de connection pour établir une seconde connection entre les deux combinés téléphoniques,
- établissement de la deuxième connection entre les deux combinés téléphoniques,
- transmission des données bipassant la base.

La Demanderesse s'est donc fixé comme objectif particulier d'agencer les combinés téléphoniques de façon à réduire les manipulations à celles requises sur des talkies walkies

Elle y est parvenue avec le procédé conforme à l'invention d'établissement de communications inter-combinés téléphoniques dans un réseau local de radiocommunication à accès duplex multiple par division temporelle, comprenant une pluralité de combinés téléphoniques et une base radio reliée à un réseau externe à laquelle ils sont associés, les combinés téléphoniques étant agencés pour pouvoir émettre en mode direct, caractérisé par le fait qu'au moins l'un des combinés téléphoniques se transforme en base radio et émet un message de type à sonnerie de groupe lorsqu'il est appelant.

Grâce à la solution de l'invention, une fois que l'on a mis les combinés téléphoniques en position de communication directe de combiné téléphonique à combiné téléphonique, un des utilisateurs entre en communication avec son ou ses correspondants en appuyant sur la touche de prise de ligne. A ce moment, le ou les combinés téléphoniques sonnent et le premier qui « décroche » prend la communication. Si le premier combiné téléphonique qui a décroché n'est pas le destinataire, il raccroche, et on recommence la procédure.

La description qui suit donne un exemple de réalisation en regard des dessins sur lesquels,
la figure 1 représente schématiquement un réseau local de radiocommunication DECT ;
la figure 2 représente le schéma bloc fonctionnel d'un combiné téléphonique du réseau et,
la figure 3 représente un organigramme illustrant la procédure de communication.

Le réseau téléphonique de la figure est ici un réseau à la norme DECT et comporte une base radio 1 reliée à une liaison 10 d'un réseau externe, le réseau téléphonique commuté par exemple. La base gère les communications d'une pluralité de terminaux radios tels que ceux référencés C1 et C2, situés dans la zone de couverture radio de la base. Les terminaux sont des combinés téléphoniques.

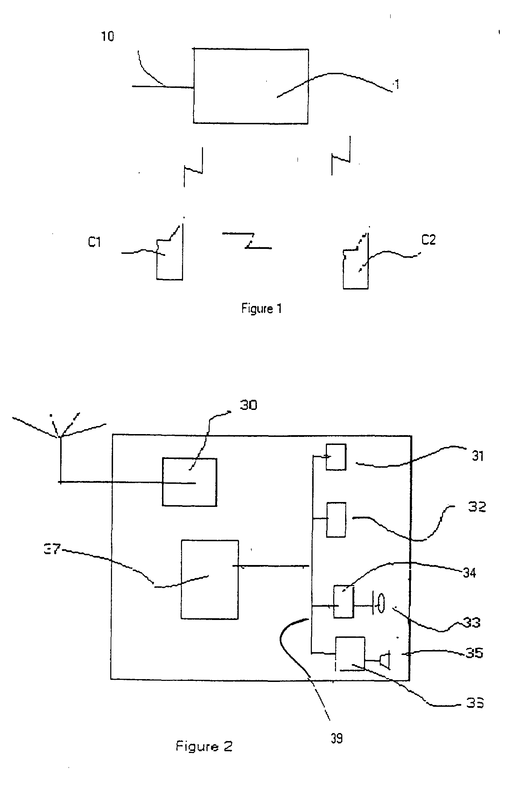

La figure 2 représente schématiquement les différents blocs fonctionnels d'un combiné téléphonique C1, mis en oeuvre dans le cadre de l'invention. Le combiné téléphonique comprend de façon classique, un bloc d'émission et de réception radio 30, une interface homme-machine 39 et un bloc central de commande 37. Le bloc radio 30 est destiné à émettre et recevoir des données à travers un canal de transmission radio, suivant le protocole DECT, afin de communiquer avec la base 1. L'interface homme-machine 39 comprend un clavier de saisie 31, un écran d'affichage 32, un microphone 33 et un haut-parleur 35. Le microphone 33 et le haut-parleur 35 sont respectivement reliés à un convertisseur analogique / numérique (CAN) 34 et à un convertisseur numérique / analogique (CNA) 36. Le clavier de saisie 31 comprend des touches téléphoniques standards dont la touche de prise de ligne, une touche pour commander l'affichage d'un menu principal et des touches pour se déplacer dans l'arborescence de menus. Le bloc central de commande 37 comprend un microprocesseur, auquel tous les éléments du combiné téléphonique C1 sont reliés, et est agencé pour commander le fonctionnement du combiné téléphonique C1.

De façon classique, la base 1 synchronise les terminaux, c'est à dire les asservit pour caler leurs trames en opposition sur celle de la base radio, par émission cyclique sur une voie balise d'un message de synchronisation. Le message spécifie le rang, de 0 à 11, de la voie balise dans la trame et les terminaux peuvent ainsi déterminer l'instant futur du début de la trame suivante. Ils sont ainsi parfaitement calés en opposition de phase par rapport à la trame de la base radio.

Lorsque les deux terminaux C1 et C2 ne sont pas à portée radio de la base radio, on sait établir une communication entre les deux terminaux dans ce cas. Il s'agit d'une communication dite en mode direct. Les combinés téléphoniques comportent la fonction mode direct. Dans ce cas, au moins l'un des combinés téléphoniques, celui qui est appelant, comporte la fonction base radio.

Pour pouvoir établir une communication en mode direct, les utilisateurs doivent au préalable saisir un numéro de groupe de 000 à 999, le numéro de leur combiné téléphonique et les numéros de combiné téléphonique des correspondants, entre 00 et 99.

Ensuite, les utilisateurs doivent sélectionner sur leur combiné téléphonique l'utilisation en mode direct, soit dans un menu déroulant qui apparaît sur l'écran du combiné téléphonique, soit sur une touche spécifique si le combiné téléphonique en est pourvu.

Quand il n'y a pas de communication, tous les combinés téléphoniques sont alors à l'état « Actif non synchronisé ». Lorsque les combinés téléphoniques sont hors de portée de la base radio, aucun signal de balise n'est émis et les combinés téléphoniques balayent toutes les 10 secondes les canaux à la recherche d'un signal avec l'identité appropriée. Lorsqu'un utilisateur, dont le combiné téléphonique comporte la fonction base radio, veut établir une communication hors de portée de la base, il spécifie le numéro de combiné téléphonique de l'appelé puis appuie sur le bouton de prise de ligne. Le combiné téléphonique appelant se transforme en base radio. Un canal est sélectionné, et le combiné téléphonique commence à émettre un signal de balise avec le message approprié qui comporte notamment l'identification de combiné téléphonique du correspondant. Tous les combinés téléphoniques reçoivent le signal de balise mais seul le combiné téléphonique appelé est autorisé à se placer en l'état au repos synchronisé. Il est alors en attente de communication et maintient la synchronisation trame et multi-trame avec la base radio.

Le combiné téléphonique appelé sonne et l'utilisateur décroche. Conformément à la norme DECT les messages échangés entre les deux combinés téléphoniques sont du type P_{T} (paging tail) au format court et comprennent l'identifiant temporaire assigné (TPUI) du combiné téléphonique appelé. Cette valeur est calculée à partir du numéro de groupe et du numéro de combiné téléphonique.

Conformément à l'invention, on simplifie la procédure de communication en mode direct en incorporant au message émis par la balise une fonction de sonnerie de groupe.

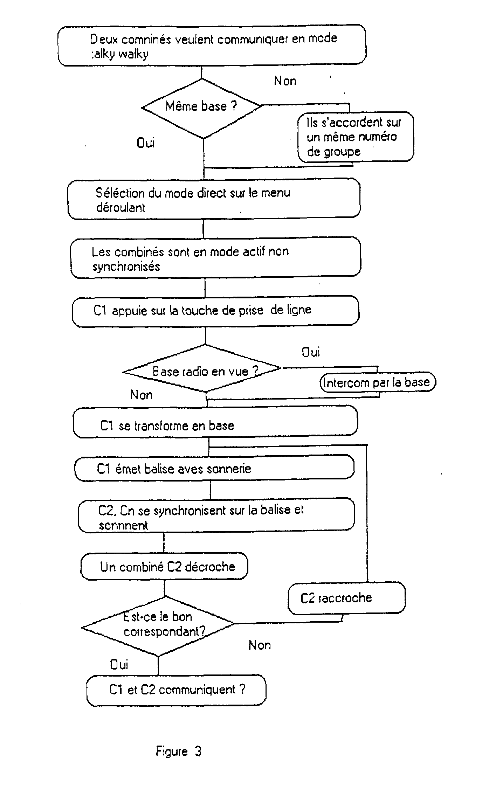

La procédure s'établit alors comme suit ; en référence à la figure 3.

Deux utilisateurs ou plus souhaitant pouvoir établir entre eux une communication de type talky walky avec leurs combinés téléphoniques C1, C2, Cn doivent d'abord vérifier s'ils sont appariés à la même base. Pour cela, ils vérifient sur le menu déroulant de leurs combinés téléphoniques qu'ils ont le même numéro de groupe. Le cas échéant, ils choisissent un numéro commun.

Ensuite ils sélectionnent sur leur menu la fonction mode direct sans identifiant. Tous les combinés téléphoniques sont alors dans l'état logique « actif non synchronisé. Ils scannent à intervalle régulier les canaux en attente d'un signal de balise.

Au bout d'un certain moment, un des utilisateurs souhaite entrer en communication avec un des autres utilisateurs. Il appuie sur la touche de prise de ligne de son combiné téléphonique C1.

Si C1 est en vue radio de la base à laquelle tous les combinés téléphoniques sont appariés, une intercommunication s'établit alors au travers de la base radio.

Si C1 n'est pas en vue radio de la base, il se transforme alors en base radio et émet un signal de balise sur la quelle les autres combinés téléphoniques se synchronisent. Comme ils reçoivent chacun le mot indiquant que la sonnerie est destinée au groupe, ils sonnent tous.
Un des utilisateurs va décrocher et établir la communication avec C1. C1 va savoir si C2 est le correspondant qu'il souhaitait atteindre. Si c'est le cas, la communication continue. Si ce n'est pas le cas il demande à C2 de raccrocher et interrompt la communication. Il appuie à nouveau sur la touche de prise de ligne. Un autre correspondant décroche. On répète la procédure jusqu'à ce que l'on trouve le bon correspondant. Tous les autres combinés téléphoniques qui sont à portée radio pendant le balayage des canaux reconnaissent le signal de balise et se synchronisent sur le canal de la balise.

Il est certain que cette procédure présente un intérêt lorsqu'il n'y a qu'un seul correspondant. On est certain de l'atteindre immédiatement lorsqu'on appuie sur la touche verte.

## Revendications

1. Procédé d'établissement de communications inter-combinés téléphoniques dans un réseau local de radiocommunication à accès duplex multiple par division temporelle, comprenant au moins une base radio (1) reliée à un réseau externe tel que le réseau téléphonique commuté et, associée à celle-ci une pluralité de combinés téléphoniques (C1, Cn) dont au moins l'un (C1) est agencé pour pouvoir se transformer en base radio et établir une communication en mode direct, **caractérisé par le fait que** ledit combiné téléphonique (C1) est agencé pour émettre en mode direct un signal de balise comportant un message de type à sonnerie de groupe.

2. Procédé selon la revendication précédente, les combinés téléphoniques (C1, Cn) n'étant pas appariés à une même base radio, **caractérisé par le fait qu'**il comprend une étape de pré-saisie d'un numéro de groupe commun par les combinés téléphoniques devant communiquer en mode direct.

3. Procédé selon la revendication 1 **caractérisé par le fait que**, lorsque les autres combinés téléphoniques (C2, Cn) à portée radio sonnent, le premier combiné téléphonique qui a décroché prend la communication.

4. Procédé selon la revendication précédente, **caractérisé par le fait que** si le premier (C2) qui a décroché n'est pas le destinataire, il raccroche et on recommence la procédure d'émission dudit signal de balise par appui sur la touche de prise de ligne.

5. Combiné téléphonique pour la mise en oeuvre du procédé selon l'une des revendications précédentes, agencé pour pouvoir se mettre en base radio, **caractérisé par le fait qu'**il est agencé pour émettre un signal de balise comportant un message de type à sonnerie de groupe.

## Patentansprüche

1. Verfahren zur Verbindungsherstellung zwischen Telefonhandgeräten in einem lokalen Funkverbindungsnetz mit Mehrfachzugriff im Zeitmultiplex, mindestens eine Funkbasisstation (1) umfassend, die an ein externes Netz wie das Fernsprechwahlnetz angeschlossen ist, und der mehrere Telefonhandgeräte (C1, Cn) zugeordnet sind, wovon mindestens eines (C1) so eingerichtet ist, dass es sich in eine Funkbasisstation verwandeln und eine Verbindung im Direktbetrieb herstellen kann, **dadurch gekennzeichnet, dass** das Telefonhandgerät (C1) dazu eingerichtet ist, im Direktbetrieb ein Markierungssignal auszusenden, das eine Nachricht von der Art eines Gruppenrufsignals umfasst.

2. Verfahren nach dem vorhergehenden Anspruch, wobei die Telefonhandgeräte (C1, Cn) nicht ein und derselben Funkbasisstation zugeordnet sind, **dadurch gekennzeichnet, dass** es einen Schritt des Vorerfassens einer gemeinsamen Gruppennummer durch die Telefonhandgeräte umfasst, die im Direktbetrieb kommunizieren sollen.

3. Verfahren nach Anspruch 1, **dadurch gekennzeichnet, dass**, wenn die anderen Telefonhandgeräte (C2, Cn) im Funkbereich klingeln, das erste Telefonhandgerät, das abnimmt, die Verbindung übernimmt.

4. Verfahren nach dem vorhergehenden Anspruch, **dadurch gekennzeichnet, dass**, falls der Erste (C2), der abnimmt, nicht derjenige ist, dem der Anruf gegolten hat, er auflegt und der Sendevorgang des Markierungssignals wiederholt wird, indem die Leitungseinwahltaste gedrückt wird.

5. Telefonhandgerät zum Durchführen des Verfahrens nach einem der vorhergehenden Ansprüche, das dazu eingerichtet ist, sich in eine Funkbasisstation zu verwandeln, **dadurch gekennzeichnet, dass** es dazu eingerichtet ist, ein Markierungssignal zu senden, das eine Nachricht von der Art eines Gruppenrufsignals umfasst.

## Claims

1. Method of establishing communication between handsets in a local radiocommunication network with time-division multiple access/duplex, comprising at least one radio base (1) connected to an external network such as the switched telephone network, and, associated with said base, a plurality of handsets (C1, Cn) of which at least one (C1) is arranged to be able to transform itself into a radio base and establish a communication in direct mode, **characterised in that** said handset (C1) is arranged to send in direct mode a beacon signal including a message of the group ringing type.

2. Method according to the preceding claim, the handsets (C1, Cn) not being paired to the same radio base, **characterised in that** it includes a stage of prior seizure of a common group number by the handsets which are to communicate in direct mode.

3. Method according to claim 1, **characterised in that**, when the other handsets (C2, Cn) within radio range ring, the first handset to be lifted takes the communication.

4. Method according to the preceding claim, **characterised in that**, if the first person (C2) to have lifted the handset is not the intended recipient, he hangs up and the process of sending said beacon signal is restarted by pressing on the seizure key.

5. Handset for implementing the method according to one of the preceding claims, arranged to be able to make itself into a radio base, **characterised in that** it is arranged to send a beacon signal including a message of the group ringing type.
